# EUROPÄISCHE PATENTANMELDUNG

(11) **EP 4 173 720 A1**
(43) Veröffentlichungstag der Anmeldung: **03.05.2023**
(21) Anmeldenummer: 22203881.2
(22) Anmeldetag: 26.10.2022
(51) Int. Cl.: B05B 1/06, B05B 7/08, B05B 7/12, B05B 12/18, B05B 1/32, B01J 2/02

(54) **ZERSTÄUBUNGSDÜSE**

(30) Priorität: 29.10.2021 DE 102021128338
(71) Anmelder: Romaco Innojet GmbH, 79585 Steinen (DE)
(72) Erfinder: Koch, Kai, 79585 Steinen-Höllstein (DE); Käding, Bastian, 79594 Inzlingen (DE)
(74) Vertreter: Witte, Weller & Partner Patentanwälte mbB

(57) **Zusammenfassung**

Die vorliegende Erfindung betrifft eine Zerstäubungsdüse (10), mit einem ersten Strömungskanal (12) zum Führen eines zu zerstäubenden Mediums, einem zweiten Strömungskanal (14) zum Führen eines gasförmigen Sprühmediums, und einer biegeschlaffen Membran (30), die den ersten Düsenauslass (22) von dem zweiten Düsenauslass (24) derart trennt, dass eine dem ersten Düsenauslass (22) zugewandte, erste Seite (40) der Membran (30) eine bewegliche Seitenwand des ersten Düsenauslasses (22) bildet und eine gegenüberliegende, dem zweiten Düsenauslass (24) zugewandte, zweite Seite (42) der Membran (30) eine bewegliche Seitenwand des zweiten Düsenauslasses (24) bildet. Die Membran (30) ist dazu eingerichtet, den ersten Düsenauslass (22) in einem inaktiven Zustand der Zerstäubungsdüse (10), in dem kein zu zerstäubendes Medium durch den ersten Strömungskanal (12) geführt wird, zu schließen und sich in einem aktiven Zustand der Zerstäubungsdüse (10), in dem das zu zerstäubende Medium durch den ersten Strömungskanal (12) geführt wird, elastisch zu verformen, um den ersten Düsenauslass (22) ringspaltförmig zu öffnen.

## Beschreibung

Die vorliegende Erfindung betrifft eine Zerstäubungsdüse, mit einem ersten Strömungskanal zum Führen eines zu zerstäubenden Mediums, der in einen ersten Düsenauslass mündet, und mit einem zweiten Strömungskanal zum Führen eines gasförmigen Sprühmediums, der in einen zweiten ringspaltförmigen Düsenauslass mündet.

Eine derartige Zerstäubungsdüse ist beispielsweise aus der EP 1 521 639 B1 bekannt.

Derartige Zerstäubungsdüsen dienen dazu, ein zu zerstäubendes Medium, meist eine Flüssigkeit, manchmal auch ein Pulver, mit Hilfe eines gasförmigen Sprühmediums zu zerstäuben. Das zu zerstäubende Medium wird dabei unter Druck durch einen im Inneren der Zerstäubungsdüse verlaufenden Strömungskanal (hier "erster Strömungskanal" genannt) zu einem meist ringspaltförmigen Düsenauslass (hier "erster Düsenauslass" genannt) transportiert.

Gleichzeitig wird durch einen zweiten Strömungskanal ein gasförmiges Sprühmedium, meist Luft, druckbeaufschlagt zu einem zweiten ringspaltförmigen Düsenauslass geführt, der benachbart zu dem ersten Düsenauslass angeordnet ist. Das unter Druck gesetzte Sprühmedium bzw. die Sprühluft sorgt dann für eine entsprechend feine Verteilung des zu zerstäubenden Mediums.

Je nachdem, wie der Mündungskopf der Düse ausgebildet ist, also die beiden Düsenauslässe orientiert sind, und wie die Drücke in den beiden Strömungskanälen eingestellt sind, sprühen solche Düsen in axialer Richtung, seitlich, also schräg zur Axialrichtung, oder in radialer Richtung heraus. Aufgrund der ringspaltförmigen Düsenauslässe wird das Sprühmedium 360° rundherum um die Längsachse der Zerstäubungsdüse versprüht. Dabei sind entsprechend der vorgenannten Einstellmöglichkeiten typischerweise Sprühwinkel, also Winkel des Sprühkegels bzw. Sprühzylinders relativ zur Längsachse der Zerstäubungsdüse, zwischen 0° (Sprühzylinder parallel zur Längsachse der Zerstäubungsdüse) und 180° (Sprühen in radialer Richtung) möglich.

Die Ausrichtung der Zerstäubungsdüse selbst kann je nach Anwendung variieren. Sie kann als stehende Düse ausgebildet sein, so dass die Längsachse der Zerstäubungsdüse in Vertikalrichtung ausgerichtet ist und das zu zerstäubende Medium vertikal nach oben, geneigt oder in Horizontalrichtung versprüht wird. Es gibt jedoch auch Anwendungsfälle, in denen die Zerstäubungsdüse vertikal nach unten ausgerichtet ist. Grundsätzlich wäre auch eine horizontale oder schräge Anordnung der gesamten Zerstäubungsdüse möglich.

Derartige Zerstäubungsdüsen finden verbreitet Einsatz in Vorrichtungen zum Granulieren oder Beschichten von partikelförmigem Gut. Die vorliegende Erfindung betrifft daher auch eine solche Vorrichtung zur Behandlung von partikelförmigem Gut, die eine erfindungsgemäße Zerstäubungsdüse aufweist.

Beim Granulieren wird eine klebrige Flüssigkeit versprüht, die dazu dient, die Partikel zu größeren Agglomeraten, also den gewünschten Granulaten, zu verkleben.

Beim Beschichten wird auf die Oberfläche eines zu beschichtenden Partikels eine Überzugsschicht aufgesprüht. Beispielsweise können Pellets, fertige Granulate oder ganze Tabletten beschichtet werden, um diese mit einer äußeren Überzugsschicht zu versehen.

Solche Apparaturen finden vor allem in der pharmazeutischen Industrie Einsatz. Dort werden Tabletteninhaltsstoffe, die als feinstäubige Pulver produziert werden, zur handhabbareren, beispielsweise zu Tabletten verpressbaren Granulaten agglomeriert und/oder solche Tabletten mit entsprechend gewünschten Überzugsschichten versehen.

Mit den darin verwendeten Zerstäubungsdüsen werden typischerweise Suspensionen, Dispersionen oder Lösungen versprüht. Solche Zerstäubungsdüsen sind auch in sog. "Hot-Melt"-Verfahren anwendbar, bei denen schmelzbare Stoffe, wie zum Beispiel Wachsschmelzen oder Hartfett, unter thermischem Einfluss verarbeitet werden.

Um ein möglichst feines Versprühen zu erzielen, wird bei den ringförmigen Düsenauslässen meist mit Flüssigkeitsquerschnitt gearbeitet, die im Bereich von < 0,25 mm liegen.

Wie bereits in der EP 1 521 639 B1 beschrieben, kann es im praktischen Einsatz solcher Sprühdüsen dazu kommen, dass insbesondere bei schwierigen Suspensionen oder Dispersionen, bedingt durch nicht gelöste Feststoffanteile, der sehr geringe Flüssigkeitsquerschnitt am Düsenauslass verstopft. Dies ist insbesondere auch dann zu beobachten, wenn diese Feststoffanteile faserigen oder kristallinen Charakter haben.

Derartige Verstopfungen können dazu führen, dass das zu zerstäubende Medium nicht mehr gleichmäßig oder im schlimmsten Fall gar nicht mehr aus dem ringspaltförmigen Düsenauslass austritt. Dies hat verständlicherweise negative Auswirkungen auf das Behandlungsergebnis und kann im schlimmsten Fall zu einem Totalausfall der Zerstäubungsdüse führen.

In einem Wirbelschichtcoater wird beispielsweise das zu behandelnde Gut um die Düse herum verwirbelt bzw. bewegt, so dass dann, bei einer umfänglich aufgrund Verstopfung ungleich sprühenden Düse, ein unregelmäßiges Behandlungsergebnis erzielt wird.

Derartige Verstopfungen werden bei der aus der EP 1 521 639 B1 bekannten Zerstäubungsdüse versucht dadurch zu vermeiden, dass der ringspaltförmige Düsenauslass während des Versprühens des zu zerstäubenden Mediums rotativ bewegt wird. Genauer gesagt sind die Wände, die an den Strömungskanal angrenzen, welcher das zu zerstäubende Medium führt, relativ zueinander um die Düsenlängsachse drehbar.

Eine auf diese Weise dynamisierte Sprühdüse bietet ein hohes Maß an Funktions- und Prozesssicherheit, welches sich vor allem bei Prozessen mit langer Dauer bemerkbar macht. Im Umkehrschluss handelt es sich jedoch auch um ein relativ aufwendiges System.

Es gibt viele Prozesse, deren Dauer sehr viel kürzer ist und die von einer derartig rotativ angetriebenen Sprühdüse nur bedingt profitieren. Die Größe des sehr kleinen Ringspalts am Düsenauslass muss nämlich auch bei dieser Düsenart sehr genau an die Partikelgröße angepasst werden, da es ansonsten zu Beeinträchtigungen des Prozesses oder auch hier zu einem Austrocknen des Düsenauslasses kommen kann. Insbesondere wenn vergleichsweise wenig Sprühmedium verstäubt werden soll, kann es bei der zuvor genannten rotativ angetriebenen Düse zu vergleichsweise hohem Montageaufwand kommen. Für solche Anwendungen wäre eine robuster ausgeführte Sprühdüse, die kostengünstiger herstellbar ist und sich einfacher bedienen lässt, wünschenswert.

Grundsätzlich ließe sich für solche Anwendungen über eine rein statisch aufgebaute Zerstäubungsdüse nachdenken. Eine solche wäre sehr viel einfacher und damit robuster aufgebaut. Hierbei ergibt sich jedoch das Problem, dass der Sprühspalt nicht dynamisiert ist, d.h. dass keine Relativbewegung der Spalt-bildenden Oberflächen erfolgt, was wiederum eine hohe Gefahr zur Bildung von Verkrustungen am ringspaltförmigen Düsenauslass birgt.

Es ist daher eine Aufgabe der vorliegenden Erfindung, eine Zerstäubungsdüse bereitzustellen, welche einfacher und robuster aufgebaut ist als die zuvor erwähnte, aus der EP 1 521 639 B1 bekannte Zerstäubungsdüse, damit kostengünstiger herstellbar ist, wobei aber dennoch die Gefahr der Bildung von Verkrustungen am ringspaltförmigen Düsenauslass auf ein Minimum reduziert bleibt. Idealerweise sollte die bereitzustellende Zerstäubungsdüse eine einfache Einstellung der Sprühspalt-Breite ermöglichen und deren Bauteile relativ einfach austauschbar sein.

Diese Aufgabe wird ausgehend von einer Zerstäubungsdüse der eingangs genannten Art gemäß Anspruch 1 dadurch gelöst, dass die Zerstäubungsdüse eine biegeschlaffe Membran aufweist, die den ersten Düsenauslass von dem zweiten Düsenauslass derart trennt, dass eine dem ersten Düsenauslass zugewandte, erste Seite der Membran eine bewegliche Seitenwand des ersten Düsenauslasses bildet und eine gegenüberliegende, dem zweiten Düsenauslass zugewandte, zweite Seite der Membran eine bewegliche Seitenwand des zweiten Düsenauslasses bildet. Die Membran ist dazu eingerichtet, den ersten Düsenauslass in einem inaktiven Zustand der Zerstäubungsdüse, in dem kein zu zerstäubendes Medium durch den ersten Strömungskanal geführt wird, zu schließen und sich in einem aktiven Zustand der Zerstäubungsdüse, in dem das zu zerstäubende Medium durch den ersten Strömungskanal geführt wird, elastisch zu verformen, um den ersten Düsenauslass ringspaltförmig zu öffnen.

Anstelle einer rotativen Bewegung der Seitenwände des ringspaltförmigen Düsenauslasses, wie es in der EP 1 521 639 B1 vorgeschlagen ist, wird erfindungsgemäß also eine Membran zur Dynamisierung der Sprühspalt-Öffnung verwendet. Bei dieser Membran handelt es sich um ein biegeschlaffes Bauteil, welches auch als forminstabil, formlabil oder flexibel biegsam bezeichnet werden kann. Derartige biegeschlaffe Bauteile sind gekennzeichnet durch einen niedrigen Elastizitätsmodul, geringe Dehnsteifigkeit und daher vergleichsweise große Verformungen bereits infolge geringer Kraft- und Momentbeanspruchung. Es handelt sich somit also um ein elastisch verformbares Bauteil, welches sich im aktiven Zustand der Zerstäubungsdüse entsprechend bewegt.

Genauer gesagt bewegt sich die Membran im aktiven Zustand der Zerstäubungsdüse nicht translatorisch. Stattdessen verformt sie sich bedingt durch das Austreten des zu zerstäubenden Sprühmediums und öffnet somit den ersten Düsenauslass ringspaltförmig. Tatsächlich handelt es sich bei der genannten Verformungsbewegung um eine Art Vibration, die einen ähnlichen Effekt wie die zuvor beschriebene rotative Bewegung der aus der EP 1 521 639 B1 bekannten Zerstäubungsdüse hat.

Der ringspaltförmige erste Düsenauslass, durch den das zu zerstäubende Medium austritt, wird durch das zu zerstäubende Medium selbst gebildet. Hierbei passt sich die Spaltgröße automatisch an den Druck bzw. die Durchflussrate des in dem ersten Strömungskanal geführten zu zerstäubenden Mediums an und schließt automatisch wieder, wenn die Förderung des zu zerstäubenden Mediums gestoppt wird. Die Gefahr des Austrocknens des ersten Düsenauslasses wird dadurch auf ein Minimum reduziert, da entweder das zu zerstäubende Medium durch den ersten Düsenauslass hindurchtritt oder dieser erste Düsenauslass durch die Membran verschlossen ist.

Von der gegenüberliegenden zweiten Seite der Membran drückt das gasförmige Sprühmedium auf die Membran. Dies sorgt dafür, dass sich der erste Düsenauslass, durch den das zu zerstäubende Medium austritt, sehr gleichmäßig öffnet, so dass das Medium rundherum gleichmäßig verteilt wird. Gleichzeitig bewegt sich die Membran, wie bereits erwähnt, im aktiven Zustand der Zerstäubungsdüse ein wenig. Sie vibriert. Hierdurch werden Verkrustungen des ersten Düsenauslasses wirksam vermieden.

Die Spaltbreite des ersten Düsenauslasses justiert sich also selbst. Mit anderen Worten passt sie sich automatisch an die entsprechenden Gegebenheiten an und lässt sich durch Variieren der Einstellparameter, wie beispielsweise Durchflussrate und/oder Druck des zu zerstäubenden Mediums und Durchflussrate und/oder Druck des gasförmigen Sprühmediums, auf eine gewünschte Größe einstellen.

Nicht zu verwechseln ist diese Art der Einstellung der Spaltbreite mit der Einstellmöglichkeit, wie sie in der EP 1 521 639 B1 beschrieben ist. Darin lässt sich nämlich die Spaltbreite durch translatorische Verschiebung mindestens einer den Düsenspalt begrenzenden Seitenwand verstellen. Die Seitenwand selbst ist jedoch biegesteif ausgestaltet, so dass diese sich im aktiven Zustand der Zerstäubungsdüse nicht elastisch verformt und damit automatisch an die Gegebenheiten/Einstellparameter anpasst.

Die Art der Einstellung der Breite des ringspaltförmigen ersten Düsenauslasses ist erfindungsgemäß also sehr viel einfacher möglich. Dies reduziert den Justageaufwand für den Bediener der Zerstäubungsdüse um ein Vielfaches. Gleichzeitig ist die erfindungsgemäße Zerstäubungsdüse aus deutlich weniger Bauteilen aufgebaut, was nicht nur die Herstell- und Reparaturkosten reduziert, sondern gleichzeitig auch die Reinigung der Zerstäubungsdüse signifikant vereinfacht.

Die oben genannte Aufgabe ist daher vollständig gelöst.

Gemäß einer Ausgestaltung ist die Membran im inaktiven Zustand der Zerstäubungsdüse derart vorgespannt, dass diese auf eine den ersten Düsenauslass begrenzende Seitenwand, welche der ersten Seite der Membran zugewandt ist, drückt.

Dies sorgt für ein sicheres Verschließen des ersten Düsenauslasses im inaktiven Zustand der Zerstäubungsdüse, so dass ein Verkrusten wirksam vermieden wird. Die genannte Vorspannung der Membran wird vorzugsweise dadurch erzeugt, dass die Membran in einer Stellung montiert wird, in der die genannte Seitenwand, welche den ersten Düsenauslass begrenzt, die Membran aus ihrer natürlichen Ruhestellung seitlich etwas nach oben biegt. Je nach Einbauposition der Membran lässt sich somit ein gewünschter Schließdruck zum Schließen des ersten Düsenauslasses im inaktiven Zustand der Zerstäubungsdüse erzeugen.

Gemäß einer weiteren Ausgestaltung weist die Zerstäubungsdüse ferner einen dritten Strömungskanal zum Führen des oder eines weiteren gasförmigen Sprühmediums auf, der in einen dritten ringspaltförmigen Düsenauslass mündet, wobei der zweite und der dritte Düsenauslass auf gegenüberliegenden Seiten des ersten Düsenauslasses angeordnet sind.

Dementsprechend wird das aus dem ersten Düsenauslass austretende, zu zerstäubende Medium beidseitig von dem gasförmigen Sprühmedium, vorzugsweise Sprühluft, umströmt. Bei dem aus dem dritten Düsenauslass austretenden gasförmigen Sprühmedium kann es sich um das gleiche Sprühmedium, beispielsweise Luft, handeln, das auch aus dem zweiten Düsenauslass austritt. Grundsätzlich lässt sich aber auch ein anderes gasförmiges Sprühmedium verwenden.

Auch bei Verwendung des gleichen gasförmigen Sprühmediums ist es dennoch bevorzugt, dass die Medienzufuhr zu dem zweiten und dem dritten Strömungskanal getrennt voneinander geschieht, damit in den beiden Strömungskanälen unterschiedliche Drücke und Durchflussraten einstellbar sind.

Mit Hilfe des aus dem dritten Düsenauslass austretenden gasförmigen Sprühmediums lässt sich der Sprühwinkel des Sprühfladens aus dem zu zerstäubenden Medium einstellen. Zudem sorgt das aus dem dritten Düsenauslass austretende gasförmige Sprühmedium dafür, dass der erste Düsenauslass permanent freigeblasen wird, so dass auch im aktiven Zustand der Zerstäubungsdüse keine unerwünschten Anhaftungen oder Ansammlungen von Fest- oder Flüssigkeitsteilchen am ersten Düsenauslass entstehen. Um ein unerwünschtes Austropfen des zu zerstäubenden Mediums aus dem ersten Düsenauslass zu vermeiden, ist es insbesondere bevorzugt, dass der genannte dritte Düsenauslass in Schwerkraftrichtung unterhalb des ersten Düsenauslasses angeordnet ist.

Gemäß einer weiteren Ausgestaltung weist die Membran ein Elastomer auf. Vorzugsweise ist die Membran aus dem Elastomer hergestellt. Grundsätzlich sind auch andere flexibel biegsame Kunststoffe für die Herstellung der Membran geeignet.

Die Membran ist vorzugsweise im Inneren der Zerstäubungsdüse im Bereich eines inneren Randes der Membran radial und axial fixiert. Im aktivierten Zustand der Zerstäubungsdüse bewegt sich der innere Rand der Membran, welcher vorzugsweise im Inneren der Zerstäubungsdüse eingespannt und abgedichtet ist, also nicht. Grundsätzlich sind verschiedenste Arten von Fixierungen der Membran denkbar, wobei eine Einspannung bzw. ein Festklemmen der Membran an deren inneren Rand bevorzugt ist.

Gemäß einer weiteren bevorzugten Ausgestaltung ist die Membran in einer Draufsicht von oben betrachtet im Wesentlichen kreisringförmig oder tellerförmig ausgestaltet. Im Falle einer kreisringförmigen Ausgestaltung ist die Membran am radial äußeren Rand frei beweglich und an ihrem radial inneren Rand im Inneren der Zerstäubungsdüse fixiert.

In einer weiteren Ausgestaltung der erfindungsgemäßen Zerstäubungsdüse nimmt eine Wandstärke der Membran radial nach außen hin ab. Mit anderen Worten wird die Membran in einem Längsschnitt der Zerstäubungsdüse, welche entlang der Längsachse der Zerstäubungsdüse verläuft, radial nach außen hin dünner.

Dies hat den Vorteil, dass der radial äußere Rand der Membran eine noch höhere Flexibilität aufweist, wodurch sich die Spaltbreite des ersten Düsenauslasses noch einfacher einstellen lässt. Vorzugsweise weist die Membran an ihrem radial äußeren Rand eine Wandstärke < 0,25 mm auf.

Um eine unterschiedliche Flexibilität entlang der radialen Ausdehnung der Membran in Bezug auf das Biegeverhalten zu erzielen, kann es ferner gemäß einer Ausgestaltung vorgesehen sein, dass die Membran in einem radial inneren Bereich einen ersten Werkstoff mit einem ersten E-Modul und in einem radial äußeren Bereich einen zweiten Werkstoff mit einem zweiten E-Modul aufweist, der kleiner als der erste E-Modul ist. Dies würde ebenfalls zu der gewünschten Eigenschaft führen, dass die Membran im Bereich ihres radial äußeren Randes flexibler biegsam ist als in dem Bereich ihres radial inneren Randes, in dem sie fest eingespannt ist.

Gemäß der zuletzt genannten Ausgestaltung ist es bevorzugt, dass die beiden Bereiche aus den unterschiedlichen Werkstoffen integral miteinander verbunden sind, so dass die Membran aus einem einzigen integralen Bauteil aufgebaut ist.

Gemäß einer weiteren Ausgestaltung ist es vorgesehen, dass zumindest ein Abschnitt des zweiten Strömungskanals zylindrisch ist und entlang einer Längsachse der Zerstäubungsdüse verläuft, wobei zumindest ein Abschnitt des ersten Strömungskanals in einem orthogonal zu der Längsachse der Zerstäubungsdüse ausgerichteten Querschnitt kreisringförmig ist und den zweiten Strömungskanal umgibt, und wobei zumindest ein Abschnitt des dritten Strömungskanals in einem orthogonal zu der Längsachse der Zerstäubungsdüse ausgerichteten Querschnitt kreisringförmig ist und den ersten Strömungskanal umgibt.

Der zweite Strömungskanal, welcher das gasförmige Sprühmedium führt, welches vorzugsweise von der Oberseite auf die Membran drückt, ist demnach also zentral im Inneren der Zerstäubungsdüse angeordnet. Darum herum ist der ringförmig ausgestaltete erste Strömungskanal angeordnet, in dem das zu zerstäubende Medium geführt ist. Der dritte Strömungskanal, welcher in den dritten Düsenauslass mündet, mit Hilfe dessen im Wesentlichen der Sprühwinkel einstellbar ist, bildet den radial äußersten Kanal, der die beiden anderen Strömungskanäle umgibt.

In dieser Ausgestaltung ist es ferner bevorzugt, dass der zentral angeordnete zweite Strömungskanal durch ein in der Membran zentral angeordnetes Loch hindurchgeführt ist. Dies ermöglicht es, den zweiten Düsenauslass, trotz der zentralen Anordnung des zweiten Strömungskanals, oberhalb des ersten Düsenauslasses anzuordnen und den dritten Düsenauslass unterhalb des ersten Düsenauslasses anzuordnen und dennoch einen kompakten Aufbau der Zerstäubungsdüse zu realisieren.

Wie bereits eingangs erwähnt, betrifft die vorliegende Erfindung nicht nur die erfindungsgemäße Zerstäubungsdüse, sondern auch eine Vorrichtung zum Granulieren oder Beschichten von partikelförmigem Gut, bei der eine solche Zerstäubungsdüse zum Einsatz kommt.

Gemäß einer bevorzugten Ausgestaltung der erfindungsgemäßen Vorrichtung zum Granulieren und Beschichten von partikelförmigem Gut weist diese eine Steuereinheit auf, die dazu eingerichtet ist, das zu zerstäubende Medium unter einem einstellbaren ersten Druck dem ersten Strömungskanal zuzuführen und das gasförmige Sprühmedium unter einem einstellbaren zweiten Druck dem zweiten Strömungskanal zuzuführen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine Schnittansicht eines Ausführungsbeispiels der erfindungsgemäßen Zerstäubungsdüse, wobei Teile einer Granulier- oder Beschichtungsvorrichtung, in der die Zerstäubungsdüse zum Einsatz kommen kann, schematisch dargestellt sind;
- Fig. 2a u. 2b: Detailansichten eines oberen Teils der in Fig. 1 gezeigten Zerstäubungsdüse in einem inaktiven Zustand;
- Fig. 3a u. 3b: Detailansichten eines oberen Teils der in Fig. 1 gezeigten Zerstäubungsdüse in einem aktiven Zustand;
- Fig. 4: eine Schnittansicht einer Membran, die in der erfindungsgemäßen Zerstäubungsdüse zum Einsatz kommen kann, gemäß einem ersten Ausführungsbeispiel; und
- Fig. 5: eine Schnittansicht einer Membran, die in der erfindungsgemäßen Zerstäubungsdüse zum Einsatz kommen kann, gemäß einem zweiten Ausführungsbeispiel.

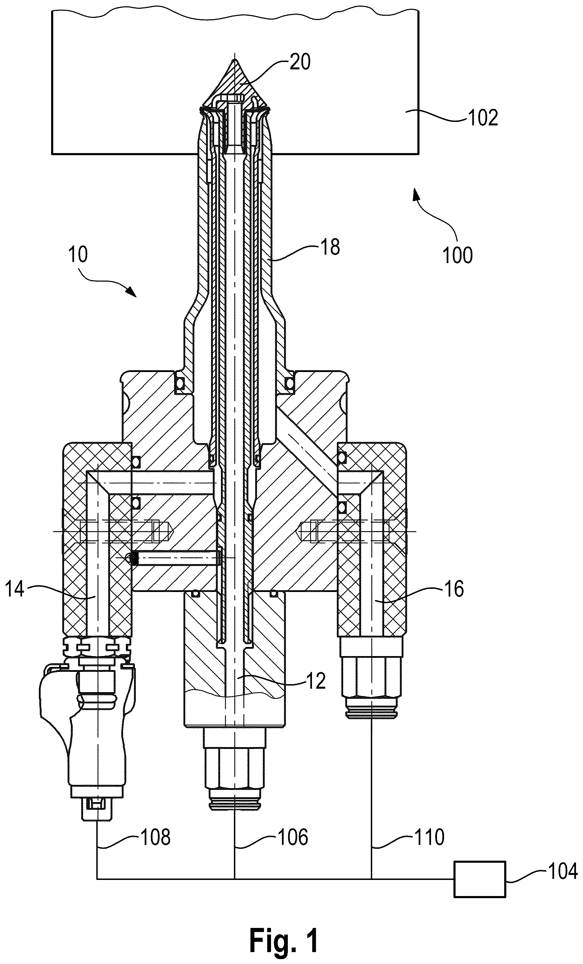

Fig. 1 zeigt eine Längsschnittansicht eines Ausführungsbeispiels der erfindungsgemäßen Zerstäubungsdüse. Die Zerstäubungsdüse ist darin in ihrer Gesamtheit mit der Bezugsziffer 10 gekennzeichnet.

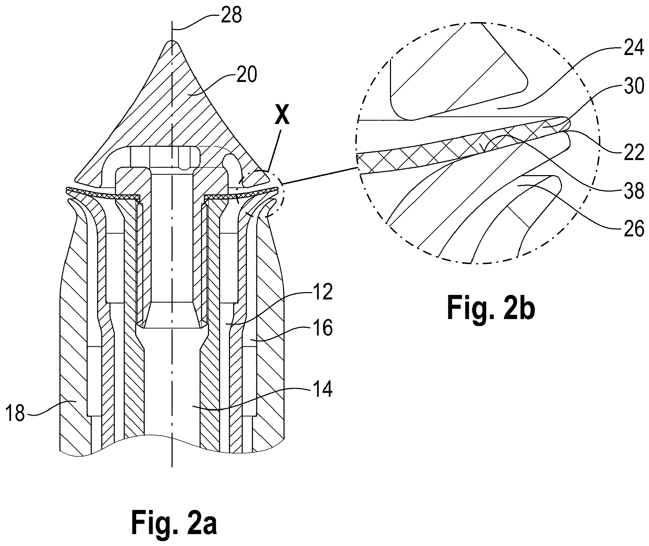

Zusätzlich sind in Fig. 2 weitere Bauteile einer Granulier- und/oder Beschichtungsvorrichtung 100, in der die Zerstäubungsdüse 10 zum Einsatz kommen kann, schematisch angedeutet. Hierzu gehört beispielsweise ein Reaktionsraum 102, in dem das partikelförmige Gut (nicht gezeigt) granuliert und/oder beschichtet wird. Meist ragt der obere Teil der Zerstäubungsdüse 10 von unten in diesen Reaktionsraum 102 hinein.

Die Granulier- oder Beschichtungsvorrichtung 100 umfasst ferner eine Steuereinheit 104, welche dazu eingerichtet ist, die zuvor eines zu zerstäubenden Mediums und eines gasförmigen Sprühmediums an die Zerstäubungsdüse 10 zu steuern.

Bei dem zu zerstäubenden Medium handelt es sich beispielsweise um eine Suspension, die mit Hilfe der Zerstäubungsdüse 10 im Reaktionsraum 102 möglichst fein zerstäubt wird, um das darin befindliche partikelförmige Gut, beispielsweise pharmazeutische Tabletten oder Partikel, zu beschichten.

Als gasförmiges Sprühmedium, welches zum Zerstäuben und Verteilen des zu zerstäubenden Mediums dient, wird meist Druckluft eingesetzt.

In dem vorliegend gezeigten Ausführungsbeispiel wird das zu zerstäubende Medium über eine schematisch angedeutete erste Zuführleitung 106 einem im Inneren der Zerstäubungsdüse 10 angeordneten ersten Strömungskanal 12 zugeführt. Das gasförmige Sprühmedium wird über weitere Zuführleitungen 108, 110, welche ebenfalls nur schematisch angedeutet sind, einem zweiten Strömungskanal 14 bzw. einem dritten Strömungskanal 16 zugeführt. Das dem zweiten Strömungskanal 14 zugeführte gasförmige Sprühmedium muss dabei nicht das gleiche sein wie das Sprühmedium, welches dem dritten Strömungskanal 16 zugeführt wird. Selbst wenn beiden Strömungskanälen 14, 16 das gleiche gasförmige Sprühmedium zugeführt wird, erfolgt dies vorzugsweise über separate Anschlüsse, um die Durchflussmenge und/oder den Druck des gasförmigen Sprühmediums in den beiden Strömungskanälen 14, 16 separat regeln zu können.

Die drei Strömungskanäle 12, 14 münden über mehrere Bohrungen im Inneren der Zerstäubungsdüse 10 in einen in etwa stabförmigen Düsenkörper 18, welcher einen oberen Teil der Zerstäubungsdüse 10 bildet.

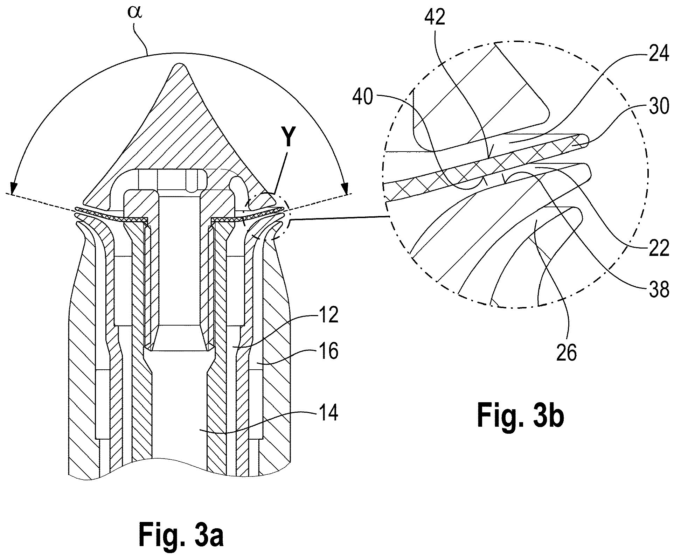

Am oberen stirnseitigen Ende dieses Düsenkörpers 18 ist ein im Wesentlichen kegelförmiger Düsenkopf 20 angeordnet, in dem mehrere Düsenauslässe 22, 24, 26 vorgesehen sind (siehe Fig. 2 und 3).

Der im Wesentlichen stabförmige Düsenkörper 18 erstreckt sich entlang einer Längsachse 28 der Zerstäubungsdüse 10. Die Strömungskanäle 12, 14, 16 verlaufen alle zumindest abschnittsweise parallel zu dieser Längsachse 28. Der zweite Strömungskanal 14 verläuft mittig durch den Düsenkörper 18 und ist weitestgehend als zylindrischer Strömungskanal ausgestaltet, wobei sich dessen Querschnittsgröße und Querschnittsform entlang der Längsachse 28, wie in Fig. 1, 2a und 3a gezeigt, teilweise verändert. Bei größeren Düsen wird hier eine zentrale Zugstange hindurch geführt, die den zweiten Strömungskanal 14 dann vom zylindrischen zu einem ringförmigen Kanal ändert. Diese Zugstange kann beispielsweise benötigt werden, um bei größeren Düsen die Düsenkappe oben besser zu fixieren. Der erste Strömungskanal 12, durch den das zu zerstäubende Medium geführt wird, ist ein im Querschnitt ringförmiger Kanal, welcher den mittig angeordneten zweiten Strömungskanal 14 umgibt. Radial noch weiter außen ist der dritte Strömungskanal 16 angeordnet, welcher ebenfalls als ein im Querschnitt kreisringförmiger Kanal ausgestaltet ist. Der dritte Strömungskanal 16 umgibt innerhalb des Düsenkörpers 18 zumindest abschnittsweise die beiden anderen Strömungskanäle 12, 14.

Jeder der drei Strömungskanäle 12, 14, 16 mündet in einen der drei im Düsenkopf 20 angeordneten Düsenauslässe 22, 24, 26. Der erste Strömungskanal 12 mündet in den ersten Düsenauslass 22. Der zweite Strömungskanal 14 mündet in den zweiten Düsenauslass 24. Der dritte Strömungskanal 16 mündet in den dritten Düsenauslass 26.

Die drei Düsenauslässe 22, 24, 26 sind allesamt jeweils ringspaltförmig ausgestaltet, wobei der erste Düsenauslass 22, durch den das zu zerstäubende Medium austritt, wie nachfolgend im Detail erwähnt, im inaktiven Zustand der Zerstäubungsdüse 10 geschlossen ist. Durch die ringspaltförmigen Düsenauslässe 22, 24, 26 treten somit das zu zerstäubende Medium und die gasförmigen Sprühmedien bzw. das gasförmige Sprühmedium 360° um die Längsachse 28 rundherum seitlich aus dem Düsenkopf 20 heraus.

Die beiden Düsenauslässe 24, 26, durch die das gasförmige Sprühmedium bzw. die gasförmigen Sprühmedien austreten, sind auf gegenüberliegenden Seiten des ersten Düsenauslasses 22 angeordnet. In der vorliegend gezeigten Ausrichtung der Zerstäubungsdüse 10 ist der zweite Düsenauslass 24 oberhalb des ersten Düsenauslasses 22 angeordnet und der dritte Düsenauslass 26 ist unterhalb des ersten Düsenauslasses 22 angeordnet.

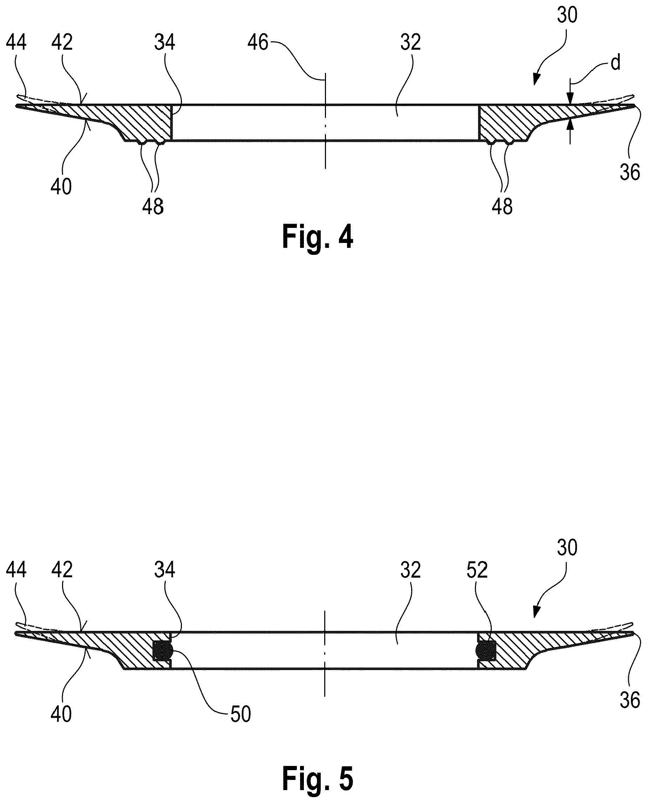

Der erste Düsenauslass 22 wird von dem zweiten Düsenauslass 24 durch eine Membran 30 getrennt. Bei der Membran 30 handelt es sich um eine biegeschlaffe, also flexibel biegsame Membran, die vorzugsweise aus einem Elastomer ist. Die Membran 30 ist in der Draufsicht betrachtet kreisringförmig ausgestaltet und weist ein zentral angeordnetes Loch 32 auf (siehe Fig. 4 und 5).

Die Membran 30 ist im Bereich ihres radial inneren Randes 34 im Inneren des Düsenkörpers 18 fixiert. Der radial äußere Rand 36 der Membran 30 ist hingegen frei beweglich.

Im Bereich ihres radial äußeren Randes 36 liegt die Membran 30 im inaktiven Zustand der Zerstäubungsdüse 10, der in Fig. 2a und 2b gezeigt ist, an einer Seitenwand 38 an, die den ersten Düsenauslass 22 von unten begrenzt. Solange das zu zerstäubende Medium nicht durch den ersten Strömungskanal 32 gefördert wird, ist der erste Düsenauslass 22 durch die Membran 30 verschlossen (siehe Fig. 2b).

Wird nun jedoch die Zerstäubungsdüse 10 aktiviert und das zu zerstäubende Medium durch den ersten Strömungskanal 12 hindurchgepresst, so hebt sich der äußere Rand 36 der Membran 30 von der Seitenwand 38 ab, wodurch der erste Düsenauslass 22 geöffnet wird. Zwischen der Unterseite 40 der Membran 30 und der Seitenwand 38 entsteht am radial äußeren Ende ein ringspaltförmiger Düsenauslass, durch den das zu zerstäubende Medium aus dem Düsenkopf 20 austritt (siehe Fig. 3b). Da die gegenüberliegende Seite 42 der Membran 30 den zweiten Düsenauslass 42 von unten her begrenzt, wird dieser bei der genannten Bewegung 30 der Membran etwas verkleinert.

Die Membran 30 trennt mit anderen Worten also den ersten Düsenauslass 22 von dem zweiten Düsenauslass 24 derart, dass die dem ersten Düsenauslass 22 zugewandte erste Seite 40 der Membran 30 eine bewegliche obere Seitenwand des ersten Düsenauslasses 42 bildet. Gleichzeitig bildet die gegenüberliegende zweite Seite 42 der Membran eine bewegliche Seitenwand des zweiten Düsenauslasses 24.

Die Spaltbreite des ersten Düsenauslasses 22 lässt sich durch Abstimmung der Durchflussrate und/oder des Drucks des durch den ersten Strömungskanal 12 geführten Mediums relativ zu der Durchflussrate und/oder dem Druck des durch den zweiten Strömungskanal 14 geführten gasförmigen Sprühmediums regeln. Das durch den zweiten Strömungskanal 14 geführte und den zweiten Düsenauslass 24 austretende gasförmige Medium drückt nämlich von oben auf die Membran 30. Hierdurch wird die Bewegung der Membran 30 im aktivierten Zustand der Zerstäubungsdüse 10 stabilisiert. Gleichzeitig sorgt der von dem gasförmigen Sprühmedium von oben auf die Membran 30 ausgeübte Druck dafür, dass diese sich rundherum sehr gleichmäßig von der Seitenwand 38 abhebt. Somit ergibt sich ringsherum entlang des ersten Düsenauslasses 22 eine sehr gleichmäßige Verteilung des zu zerstäubenden Mediums im aktivierten Zustand der Zerstäubungsdüse 10.

Das durch den dritten Düsenauslass 26 austretende gasförmige Sprühmedium dient einerseits dazu, ein unerwünschtes Abtropfen des zu zerstäubenden Mediums aus dem ersten Düsenauslass 22 zu vermeiden. Andererseits lässt sich durch eine entsprechende Regelung der Durchflussrate und/oder des Drucks des den dritten Düsenauslass 26 verlassenden gasförmigen Sprühmediums der Sprühwinkel α, unter dem das zu zerstäubende Medium den Düsenkopf 20 verlässt, einstellen bzw. regeln (siehe Fig. 3a).

Fig. 4 und 5 zeigen zwei verschiedene Ausführungsbeispiele der Membran 30. Darin ist die Membran 30 jeweils in ihrem Fertigungs- bzw. Ruhezustand gezeigt, in der sie vollständig entspannt ist. Seitlich jeweils gestrichelt angedeutet (siehe Bezugsziffer 44) ist der Einbauzustand der Membran 30 in der Zerstäubungsdüse 10.

Wie durch Vergleich der beiden in Fig. 4 und 5 jeweils angedeuteten Positionen der Membran 30 ersichtlich ist, ist der radial äußere Rand 36 der Membran 30 im Einbauzustand gegenüber ihrer Ruheposition leicht nach oben gebogen. Der äußere Rand 36 der Membran 30 drückt daher im inaktiven Zustand der Zerstäubungsdüse 10 auf die Seitenwand 38. Diese Vorspannung der Membran 30 erzeugt einen Schließdruck, der dafür sorgt, dass der erste Düsenauslass 22 im inaktiven Zustand der Zerstäubungsdüse 10 umfangsseitig vollständig geschlossen ist.

In den in Fig. 4 und 5 dargestellten Ausführungsbeispielen der Membran 30 ist diese jeweils derart ausgestaltet, dass deren Wandstärke d radial nach außen hin abnimmt. Dies hat zur Folge, dass die Membran 30 im Bereich ihres radial äußeren Randes 36 flexibler und damit beweglicher ausgestaltet ist als radial weiter innen. Der erste Düsenauslass 22 lässt sich beim Aktivieren der Zerstäubungsdüse 10 somit leicht öffnen. Der erste Düsenauslass 22 verschließt sich ebenso leichtgängig auch wieder, sobald die Zerstäubungsdüse 10 abgeschaltet wird und kein zu zerstäubendes Medium mehr durch den ersten Strömungskanal 12 geführt wird.

Der Vollständigkeit halber sei erwähnt, dass die zuvor erwähnte Wandstärke d der Membran 30 die parallel zur Symmetrieachse 46 der Membran 30 gemessene Dicke der Membran 30 meint.

Ein wesentlicher Unterschied zwischen den beiden in Fig. 4 und 5 gezeigten Ausführungsbeispielen der Membran 30 ist deren unterschiedliches Dichtungskonzept. Gemäß dem in Fig. 4 gezeigten ersten Ausführungsbeispiel weist die Membran 30 an ihrer Unterseite 40 zwei Dichtlippen 48 auf. Diese Dichtlippen 48 sind kreisringförmig ausgestaltet und verlaufen 360°-ringsherum. Da sie an der Unterseite 40 der Membran 30 angeordnet sind, wirken sie somit im Wesentlichen in Axialrichtung der Zerstäubungsdüse 10, d.h. parallel zur Längsachse 28 des Düsenkörpers 18. Die Dichtlippen 48 können in entsprechende Gegennuten, die im Inneren des Düsenkörpers 18 vorgesehen sind, eingreifen. Die Dichtlippen 48 können auch gegen eine glatte Oberfläche gedrückt werden. Damit werden die Dichtlippen 48 im montierten Zustand platt gedrückt und erzeugen so die Dichtwirkung.

Bei dem in Fig. 5 gezeigten zweiten Ausführungsbeispiel weist die Membran 30 einen Dichtring 50 auf, der als O-Ring ausgestaltet ist. Dieser Dichtring 50 ist in einer kreisringförmigen Nut 52 angeordnet, die am radial inneren Rand 34 in die Membran 30 eingebracht ist.

Dieser Dichtring 50 ist also im Wesentlichen radial wirkend. Er liegt im eingebauten Zustand im Inneren des Düsenkörpers 18 an einer zylindrischen Außenmantelfläche an und dichtet damit den radial inneren Rand 34 der Membran 30 ab (vgl. Fig. 3a).

Diverse weitere Dichtungsvarianten sind möglich. Selbstverständlich lassen sich auch beide in Fig. 4 und 5 gezeigte Dichtungskonzepte miteinander kombinieren. Grundsätzlich wäre auch nur eine der in Fig. 4 gezeigten Dichtlippen ausreichend.

Es versteht sich, dass diverse weitere Abwandlungen an den in Fig. 1-5 gezeigten Ausführungsbeispielen vorgenommen werden können, ohne den Rahmen der vorliegenden Erfindung zu verlassen.

## Patentansprüche

1. Zerstäubungsdüse (10), mit:
- einem ersten Strömungskanal (12) zum Führen eines zu zerstäubenden Mediums, der in einen ersten Düsenauslass (22) mündet,
- einem zweiten Strömungskanal (14) zum Führen eines gasförmigen Sprühmediums, der in einen zweiten ringspaltförmigen Düsenauslass (24) mündet; und
- einer biegeschlaffen Membran (30), die den ersten Düsenauslass (22) von dem zweiten Düsenauslass (24) derart trennt, dass eine dem ersten Düsenauslass (22) zugewandte, erste Seite (40) der Membran (30) eine bewegliche Seitenwand des ersten Düsenauslasses (22) bildet und eine gegenüberliegende, dem zweiten Düsenauslass (24) zugewandte, zweite Seite (42) der Membran (30) eine bewegliche Seitenwand des zweiten Düsenauslasses (24) bildet, wobei die Membran (30) dazu eingerichtet ist, den ersten Düsenauslass (22) in einem inaktiven Zustand der Zerstäubungsdüse (10), in dem kein zu zerstäubendes Medium durch den ersten Strömungskanal (12) geführt wird, zu schließen und sich in einem aktiven Zustand der Zerstäubungsdüse (10), in dem das zu zerstäubende Medium durch den ersten Strömungskanal (12) geführt wird, elastisch zu verformen, um den ersten Düsenauslass (22) ringspaltförmig zu öffnen.

2. Zerstäubungsdüse gemäß Anspruch 1, wobei die Membran (30) im inaktiven Zustand der Zerstäubungsdüse (10) derart vorgespannt ist, dass diese auf eine den ersten Düsenauslass (22) begrenzende Seitenwand (38), welche der ersten Seite (40) der Membran (30) zugewandt ist, drückt.

3. Zerstäubungsdüse gemäß Anspruch 1 oder 2, welche ferner einen dritten Strömungskanal (16) zum Führen des oder eines weiteren gasförmigen Sprühmediums aufweist, der in einen dritten ringspaltförmigen Düsenauslass (26) mündet, wobei der zweite und der dritte Düsenauslass (24, 26) auf gegenüberliegenden Seiten des ersten Düsenauslasses (22) angeordnet sind.

4. Zerstäubungsdüse gemäß einem der Ansprüche 1-3, wobei die Membran (30) ein Elastomer aufweist.

5. Zerstäubungsdüse gemäß einem der Ansprüche 1-4, wobei die Membran (30) im Inneren der Zerstäubungsdüse (10) im Bereich eines inneren Rands (34) der Membran (30) radial und axial fixiert ist.

6. Zerstäubungsdüse gemäß einem der Ansprüche 1-5, wobei die Membran (30) in einer Draufsicht von oben betrachtet im Wesentlichen kreisringförmig oder tellerförmig ist.

7. Zerstäubungsdüse gemäß einem der Ansprüche 1-6, wobei eine Wandstärke (a) der Membran (30) radial nach außen hin abnimmt.

8. Zerstäubungsdüse gemäß einem der Ansprüche 1-7, wobei die Membran (30) in einem radial inneren Bereich einen ersten Werkstoff mit einem ersten E-Modul und in einem radial äußeren Bereich einen zweiten Werkstoff mit einem zweiten E-Modul aufweist, der kleiner als der erste E-Modul ist.

9. Zerstäubungsdüse gemäß einem der Ansprüche 1-8, wobei zumindest ein Abschnitt des zweiten Strömungskanals (14) zylindrisch oder kreisringförmig ist und entlang einer Längsachse (28) der Zerstäubungsdüse (10) verläuft, wobei zumindest ein Abschnitt des ersten Strömungskanals (12) in einem orthogonal zu der Längsachse (28) der Zerstäubungsdüse (10) ausgerichteten Querschnitt kreisringförmig ist und den zweiten Strömungskanal (14) umgibt, und wobei zumindest ein Abschnitt des dritten Strömungskanals (16) in einem orthogonal zu der Längsachse (28) der Zerstäubungsdüse (10) ausgerichteten Querschnitt kreisringförmig ist und den ersten Strömungskanal (12) umgibt.

10. Zerstäubungsdüse gemäß einem der Ansprüche 1-9, wobei der zweite Strömungskanal (14) durch ein in der Membran (30) zentral angeordnetes Loch (32) hindurchgeführt ist.

11. Vorrichtung (100) zum Granulieren oder Beschichten von partikelförmigem Gut, mit einer Zerstäubungsdüse (10) nach einem der Ansprüche 1-10.

12. Vorrichtung gemäß Anspruch 11, welche ferner eine Steuereinheit (104) aufweist, die dazu eingerichtet ist, das zu zerstäubende Medium unter einem einstellbaren ersten Druck dem ersten Strömungskanal (12) zuzuführen und das gasförmige Sprühmedium unter einem einstellbaren zweiten Druck dem zweiten Strömungskanal (14) zuzuführen.
